# EUROPÄISCHE PATENTSCHRIFT

(11) **EP 2 859 871 B1**
(45) Veröffentlichungstag und Bekanntmachung des Hinweises auf die Patenterteilung: **06.04.2016**
(21) Anmeldenummer: 14002693.1
(22) Anmeldetag: 01.08.2014
(51) Int. Cl.: A61G 3/08

(54) **Abschrankungskonstruktion für einen Rollstuhlplatz in einem Fahrzeug**
Barrier structure for a wheelchair space in a vehicle
Système de barrière destiné à un espace pour fauteuil roulant dans un véhicule

(30) Priorität: 09.10.2013 DE 102013016746
(43) Veröffentlichungstag der Anmeldung: 15.04.2015
(73) Patentinhaber: MAN Truck & Bus AG, 80995 München (DE)
(72) Erfinder: Kittel, Ralf, 80939 München (DE); Schmerbeck, Franz, 94522 Wallersdorf (DE)

(56) Entgegenhaltungen:
- WO-A1-2013/045732
- DE-A1-102009 004 525
- DE-A1-102012 023 157
- GB-A- 2 063 956

## Beschreibung

Die Erfindung betrifft eine Abschrankungskonstruktion für einen Rollstuhlplatz in einem Fahrzeug, vorzugsweise in einem Omnibus.

DE 10 2009 004525 A offenbart eine Abschrankungskonstruktion gemäß des Oberbegriffs des Anspruchs 1.

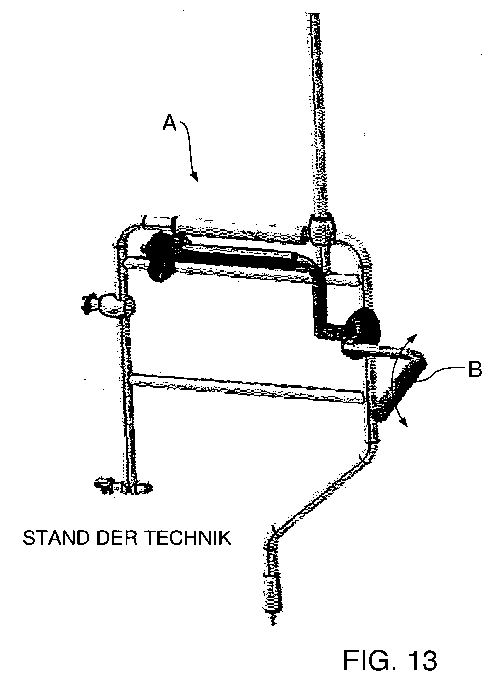

Figur 13 zeigt eine perspektivische Ansicht einer Abschrankungskonstruktion A für einen Rollstuhlplatz in einem Omnibus gemäß Stand der Technik. Die Abschrankungskonstruktion A umfasst eine schwenk- oder klappbare Abschrankungseinrichtung B. Die Abschrankungseinrichtung B kann zwischen einer hochgeklappten Nicht-Gebrauchsstellung und einer ausgeklappten Gebrauchsstellung verschwenkt werden, was durch den Doppelpfeil in Figur 13 schematisch angedeutet ist. Nachteilig an der in Figur 13 gezeigten Abschrankungskonstruktion A ist, dass der erforderliche Schwenk- oder Klappmechanismus konstruktiv relativ aufwändig ist. Zudem umfasst die Abschrankungskonstruktion A eine Vielzahl abstehender Teile, was die Verletzungs- oder Unfallgefahr erhöht und zudem zu einem optisch wenig ansprechenden Erscheinungsbild führt.

Eine Aufgabe der Erfindung ist es, eine verbesserte und/oder alternative Abschrankungskonstruktion für einen Rollstuhlplatz eines Fahrzeugs, insbesondere eines Omnibusses, zu schaffen.

Diese Aufgabe kann mit den Merkmalen des unabhängigen Anspruchs gelöst werden, Vorteilhafte Weiterbildungen können den Unteransprüchen und der folgenden Beschreibung entnommen werden.

Die Erfindung schafft eine Abschrankungskonstruktion für einen Rollstuhiplatz in einem Fahrzeug, vorzugsweise in einem Omnibus. Die Abschrankungskonstruktion umfasst ein Oberteil und ein Unterteil zur zweckmäßig feststehenden, mittelbaren oder unmittelbaren Montage an das Fahrzeug und eine Abschrankungseinrichtung, die mit dem Oberteil und dem Unterteil verbunden ist. Die Abschrankungseinrichtung zeichnet sich insbesondere dadurch aus, dass sie relativ zu dem Oberteil und dem Unterteil translatorisch in eine eingefahrene Stellung (Nicht-Gebrauchsstellung) und eine oder mehrere ausgefahrene Stellungen (Gebrauchsstellung(en)) verschiebbar ist. Die Abschrankungseinrichtung ist zweckmäßig in Fahrzeugquerrichtung verschiebbar.

Es ist möglich, dass die Abschrankungseinrichtung stufenlos verschiebbar ist.

Die Abschrankungseinrichtung ist vorzugsweise entlang eines Langlochs verschiebbar. In das Langloch kann ein Anschlag (z. B. eine Madenschraube) hineinragen, um den translatorischen Verstellweg der Abschrankungseinrichtung in der eingefahrenen Stellung und der maximal ausgefahrenen Stellung zu begrenzen. Das Langloch definiert somit zweckmäßig den Verstellweg der Abschrankungseinrichtung.

Es ist möglich, dass die Abschrankungskonstruktion eine drehbare Welle aufweist. Die Welle ist vorzugsweise drehbar, um eine Fixierung zum Fixieren der Abschrankungseinrichtung in der eingefahrenen Stellung und in einer ausgefahrenen Stellung relativ zu dem Oberteil oder dem Unterteil zu betätigen, z.B. zu aktivieren oder zu deaktivieren.

Die Welle kann zumindest abschnittsweise koaxial innerhalb des Oberteils oder des Unterteils verlaufen. Alternativ oder ergänzend kann die Welle zumindest abschnittsweise koaxial innerhalb der Abschrankungseinrichtung verlaufen.

Die Fixierung kann z.B. als Verspannfixierung (z.B. Reibungs- oder Klemmfixierung) ausgeführt sein.

Die Fixierung kann innerhalb des Oberteils oder des Unterteils angeordnet sein, vorzugsweise ohne von außen sichtbar zu sein.

Der Verstellweg der Drehbewegung der Welle wird vorzugsweise durch eine Nocken-Kulissen-Konstruktion begrenzt. Der Nocken kann z.B. an der Welle ausgebildet sein. Die Kulisse ist vorzugsweise nicht-drehbar innerhalb des Oberteils oder des Unterteils angeordnet, z.B. an einem drehfest mit dem Oberteil ausgebildeten Halteteil. Der Verstellweg der Drehbewegung der Welle ist vorzugsweise auf ungefähr 45° begrenzt.

Die Fixierung kann durch zumindest ein elastisches Element (z. B. ein Gummielement) und zumindest ein Nockenteil gebildet werden. Das Nockenteil kann zweckmäßig durch seine Drehung radial gegen das elastische Element gedrückt werden, um es gegen das Oberteil oder das Unterteil zu verspannen. Das Nockenteil kann an der Welle ausgebildet sein und/oder quasi durch die Querschnittsform der Welle selbst gebildet werden. Hierzu kann die Welle z.B. eine zumindest dreikantige, vorzugsweise zumindest vierkantige Welle sein.

Das elastische Element ist vorzugsweise in einer Öffnung oder Aussparung der Abschrankungseinrichtung fixiert, insbesondere um ein ungewolltes Mitdrehen zu verhindern. Vorzugsweise sind mehrere elastische Elemente längs der Abschrankungseinrichtung beabstandet voneinander angeordnet.

Vorzugsweise sind mehrere Nockenteile in Umfangsrichtung der Welle voneinander beabstandet.

Es ist möglich, dass die Fixierung mittels zumindest zweier Keile gebildet wird. Ein Keil kann vorzugsweise mittels eines mit der Welle drehfest verbundenen Gewindestifts gegen den anderen Teil verschoben werden, um eine Verspannung mit dem Oberteil oder dem Unterteil zu erzeugen.

Es ist ferner möglich, dass die Fixierung mittels eines elastischen Elements (z. B. ein Gummielement) und zweier Widerlagerteile gebildet wird. Das elastische Element ist zweckmäßig zwischen den zwei Widerlagerteilen angeordnet. Ein Widerlagerteil kann vorzugsweise mittels eines drehfest mit der Welle verbundenen Gewindestifts axial gegen das elastische Element gedrückt werden, um es radial gegen das Oberteil oder das Unterteil zu verspannen.

Das elastische Element wird vorzugsweise durch eines der Widerlagerteile fixiert, um es so an einem Mitdrehen zu hindern.

Die Abschrankungseinrichtung kann abschnittsweise in dem Oberteil und/oder dem Unterteil verlaufen, vorzugsweise koaxial.

Es ist möglich, dass das Oberteil, das Unterteil und/oder die Abschrankungseinrichtung als Rohrkonstruktion ausgeführt ist.

Die Abschrankungseinrichtung umfasst einen Zugang (z. B. eine Aussparung oder Öffnung), über den die Welle mittels einer Kopplungseinrichtung vorzugsweise axial betätigbar ist.

Der Zugang zur Betätigung der Welle ist vorzugsweise in einem Krümmungsabschnitt der Abschrankungseinrichtung ausgebildet.

Die Kopplungseinrichtung ist vorzugsweise an einem axialen Endabschnitt der Welle angeordnet und zur Betätigung mittels eines Innen- oder Außenvierkantschlüssels ausgebildet. Die Abschrankungseinrichtung erstreckt sich abschnittsweise koaxial zu dem Oberteil und/oder dem Unterteil und zusätzlich dazu abschnittsweise in zwei weiteren Raumrichtungen, sodass sich die Abschrankungseinrichtung über quasi alle drei Raumrichtungen (Längs-, Quer- und Höhenrichtung) erstreckt.

Die Erfindung ist nicht auf eine Abschrankungskonstruktion beschränkt, sondern umfasst auch ein Fahrzeug, vorzugsweise einen Omnibus, mit einem Rollstuhlplatz und einer Abschrankungskonstruktion, wie hierin beschrieben.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht einer Abschrankungskonstruktion für einen Rollstuhlplatz gemäß einer Ausführungsform der Erfindung mit einer Abschrankungseinrichtung in einer eingefahrenen Stellung,
- Figur 2: zeigt eine perspektivische Ansicht der Abschrankungskonstruktion aus Figur 1 mit der Abschrankungseinrichtung in einer ausgefahrenen Stellung,
- Figur 3: zeigt eine perspektivische Ansicht der Abschrankungskonstruktion der Figur 2 mit einem in einem Rollstuhlplatz angeordneten Rollstuhl,
- Figur 4: zeigt eine Vorderansicht der Abschrankungskonstruktion der Figuren 1-3,
- Figur 5: zeigt eine perspektivische Detailansicht eines Teil der Abschrankungskonstruktion der Figuren 1-4 ,
- Figur 6: zeigt einen Längsschnitt eines Teils der Abschrankungskonstruktion der Figuren 1-5,
- Figur 7: zeigt einen Längsschnitt eines Teils der Abschrankungskonstruktion der Figuren 1-6,
- Figur 8: zeigt einen Querschnitt entlang der Linie B-B aus Figur 6,
- Figur 9: zeigt einen Querschnitt entlang der Linie C-C aus Figur 6,
- Figur 10: zeigt einen Längsschnitt entlang der Linie D-D aus Figur 6,
- Figur 11: zeigt einen Längsschnitt eines Teils einer Abschrankungskonstruktion gemäß einer anderen Ausführungsform der Erfindung,
- Figur 12: zeigt einen Längsschnitt eines Teils einer Abschrankungskonstruktion gemäß einer wiederum anderen Ausführungsform der Erfindung, und
- Figur 13: zeigt eine perspektivische Ansicht einer Abschrankungskonstruktion gemäß Stand der Technik.
Die in den Figuren gezeigten Ausführungsformen stimmen teilweise überein, so dass für gleiche oder ähnliche Teile die gleichen Bezugszeichen verwendet sind und zu deren Erläuterung auch auf die Beschreibung der anderen Ausführungsformen verwiesen wird, um Wiederholungen zu vermeiden.

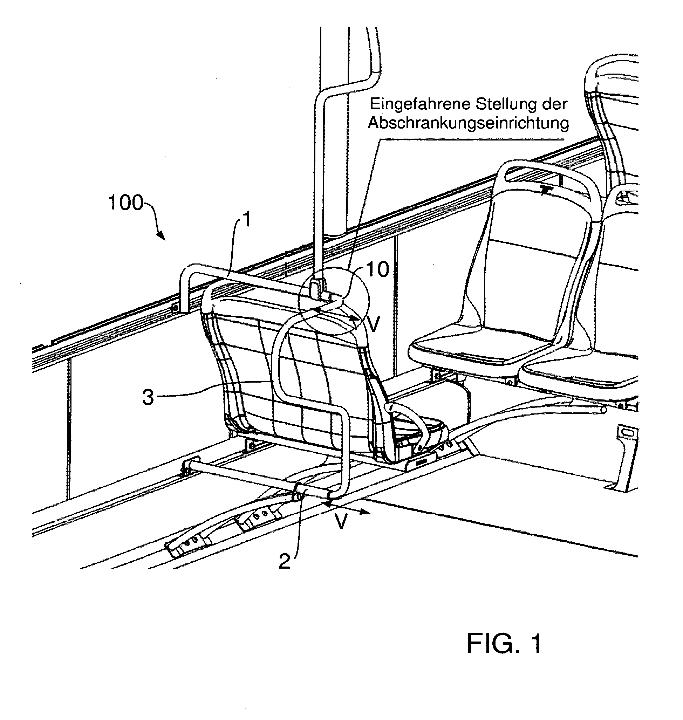

Figur 1 zeigt eine perspektivische Ansicht einer Abschrankungskonstruktion 100 für einen Rollstuhlplatz in einem Fahrzeug, vorzugsweise in einem Omnibus. Die Abschrankungskonstruktion 100 umfasst ein Oberteil 1 und ein Unterteil 2, die feststehend an das Fahrzeug montiert sind. Die Abschrankungskonstruktion 100 umfasst ferner eine mit dem Oberteil 1 und dem Unterteil 2 verbundene Abschrankungseinrichtung 3. Das Oberteil 1, das Unterteil 2 und die Abschrankungskonstruktion 3 sind als Rohrkonstruktion ausgeführt.

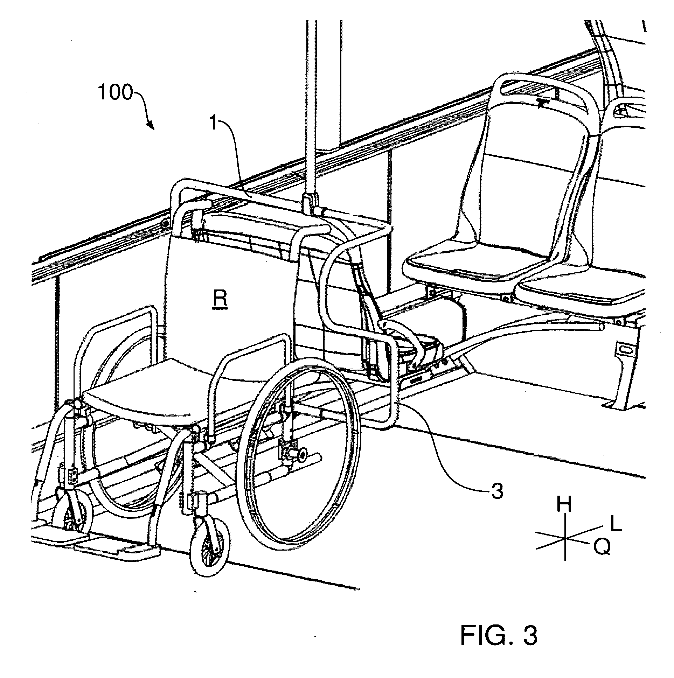

Die Abschrankungseinrichtung 3 ist relativ zu dem Oberteil 1 und dem Unterteil 3 translatorisch in eine eingefahrene Stellung und eine oder mehrere ausgefahrene Stellungen stufenlos in Fahrzeugquerrichtung Q (vgl. Figur 3) verschiebbar, was durch die Doppelpfeile V schematisch angedeutet ist. Figur 1 zeigt die Abschrankungseinrichtung 3 in einer eingefahrenen Nicht-Gebrauchsstellung. Bezugszeichen 10 kennzeichnet einen Zugang, über den eine weiter unten beschriebene Welle 6 axial betätigt und dadurch gedreht werden kann.

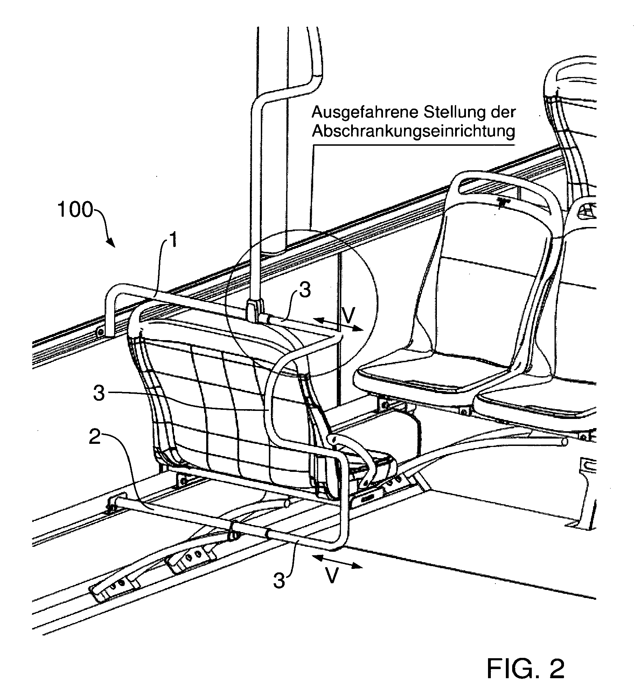

Figur 2 zeigt eine perspektivische Ansicht der Abschrankungskonstruktion 100 der Figur 1. Figur 2 zeigt die Abschrankungseinrichtung 3 in einer ausgefahrenen Gebrauchsstellung. Die Abschrankungseinrichtung 3 kann unterschiedlich weit ausgefahren werden und somit mehrere Gebrauchstellungen zur Verfügung stellen, z. B. in Abhängigkeit der Rollstuhlbreite.

Figur 3 zeigt eine perspektivische Ansicht der Abschrankungskonstruktion 100 der Figuren 1 bis 3, mit einem in einem Rollstuhlplatz befindlichen Rollstuhl R. Die Abschrankungskonstruktion 3 erstreckt sich abschnittsweise koaxial zu dem Oberteil 1 (nämlich in Querrichtung Q des Fahrzeugs bzw. der Abschrankungskonstruktion 100) und abschnittsweise koaxial zu dem Unterteil 2 (nämlich in Querrichtung Q des Fahrzeugs bzw. der Abschrankungskonstruktion 100) und zusätzlich abschnittsweise in zwei weiteren Raumrichtungen (nämlich in Höhenrichtung H und Längsrichtung L des Fahrzeugs bzw. der Abschrankungskonstruktion 100). Die Abschrankungseinrichtung 3 kann sich dadurch in quasi alle drei Raumrichtungen Q, H, L erstrecken.

Aus den Figuren 1 bis 3 wird ersichtlich, dass die Abschrankungskonstruktion 100 keine unerwünscht von dem Oberteil 1 und dem Unterteil 2 abstehende Teile aufweist, wodurch einerseits die Verletzungsgefahr vor allem stehender Fahrzeuginsassen reduziert wird und andererseits eine optisch ansprechende Abschrankungskonstruktion 100 geschaffen wird. Da die Abschrankungseinrichtung 3 keinen Bauraum an der Außenseite des Oberteils 1 und des Unterteils 2 erfordert, können letztgenannte für andere Zwecke genutzt werden, z.B. zur Anbringung von Anbauelementen der Fahrzeug-Innenausstattung, z. B. Klappsitz, Polsterplatte, etc..

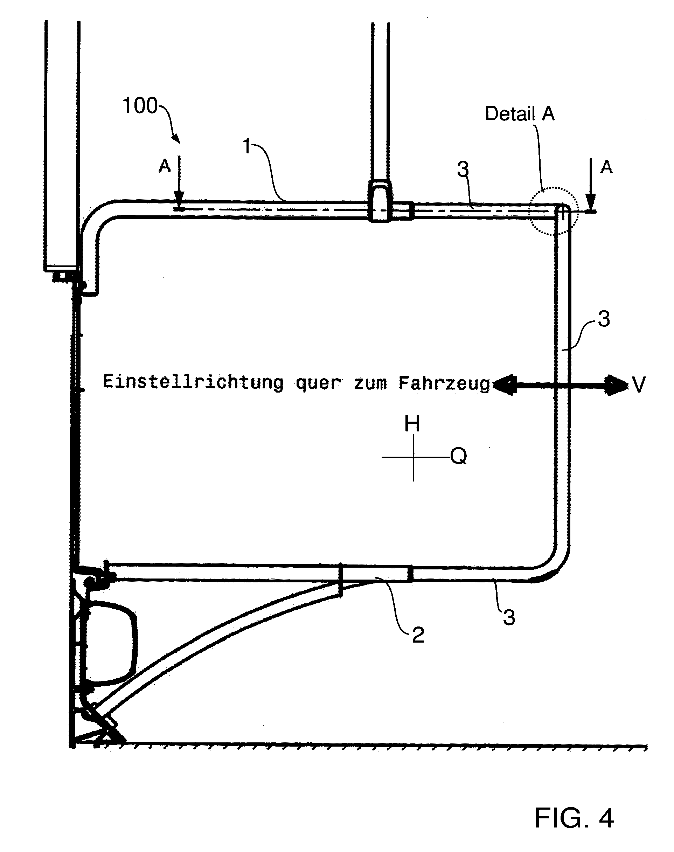

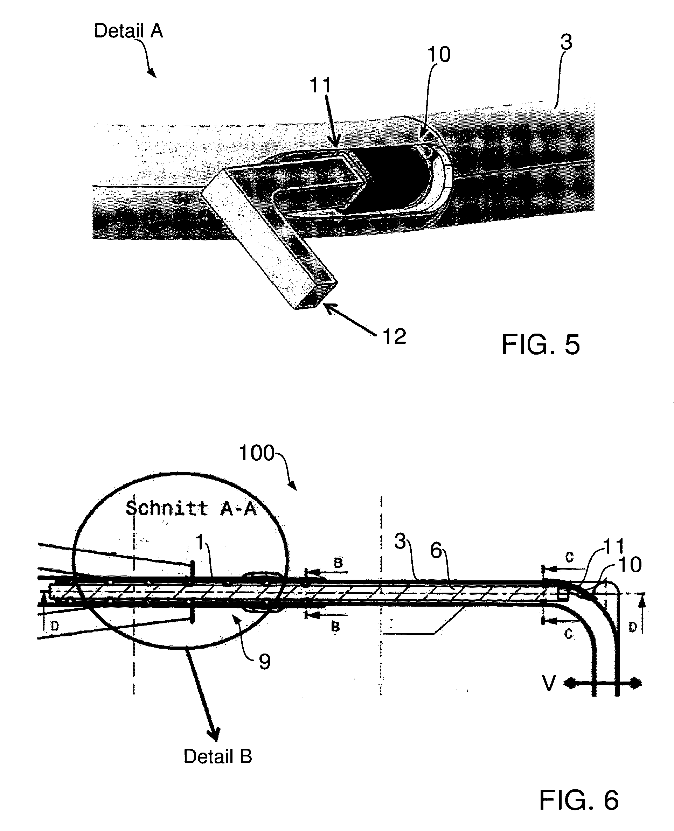

Figur 4 zeigt eine Vorderansicht auf die Abschrankungskonstruktion 100 der Figuren 1 bis 3. Figur 5 zeigt eine perspektivische Detailansicht des Details A aus Figur 4.

Figur 5 zeigt einen Zugang 10, über den die weiter unten beschriebene Welle 6 axial betätigt werden kann. Der Zugang 10 zur Betätigung der Welle 6 ist in einem Krümmungsabschnitt der Abschrankungseinrichtung 3 ausgebildet. Die Welle 6 ist mit einer Kopplungseinrichtung 11 zur Betätigung mittels eines Außen- oder Innenvierkantschlüssels 12 ausgestattet. Die Kopplungseinrichtung 11 ist an einem axialen Endabschnitt der Welle 6 angeordnet.

Figur 6 zeigt einen Längsschnitt eines Teils der Abschrankungskonstruktion 100 der Figuren 1 bis 5. In Figur 6 ist die zuvor erwähnte drehbare Welle 6 zu sehen, die sich abschnittsweise koaxial in dem Oberteil 1 und abschnittsweise koaxial in der Abschrankungseinrichtung 3 erstreckt. Die Welle 6 ist über den Zugang 10 mittels des Schlüssels 12 drehbar, um eine Fixierung 9 zum Fixieren der Abschrankungseinrichtung 3 in der eingefahrenen Stellung und in einer ausgefahrenen Stellung relativ zu dem Oberteil 1 zu betätigen. So kann die Abschrankungseinrichtung 3 über die mittels der Welle 6 betätigbare Fixierung 9 in der eingefahrenen Stellung fixiert werden, um ein unerlaubtes Herausziehen der Abschrankungskonstruktion 3 zu verhindern. Kommt jedoch ein Rollstuhlfahrer in den Omnibus, so kann der Fahrer des Omnibusses die über die Welle 6 betätigbare Fixierung 9 lösen und die Abschrankungseinrichtung 3 in eine ausgefahrene Stellung bringen. Die Abschrankungseinrichtung 3 kann daraufhin über die mittels der Welle 6 betätigbare Fixierung 9 in der ausgefahrenen Stellung fixiert werden, um ein ungewolltes Verschieben der Abschrankungseinrichtung 3 zu verhindern.

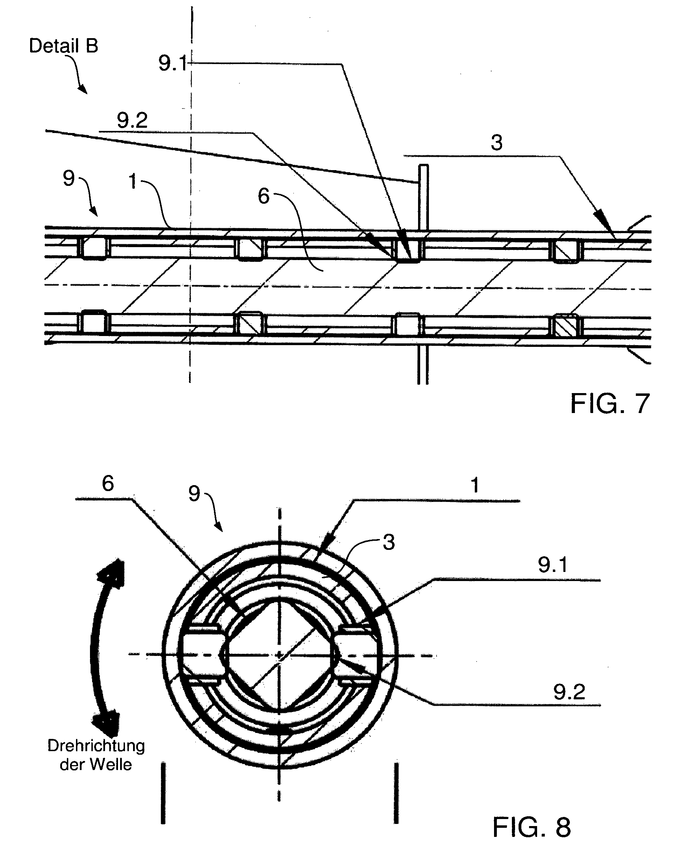

Figur 7 zeigt einen Längsschnitt des Details B aus Figur 6. Figur 7 zeigt insbesondere wie die Fixierung 9 ausgeführt sein kann. Die Fixierung 9 ist innerhalb des Oberteils 1 so ausgebildet, dass sie von außen nicht sichtbar ist. Die Fixierung 9 wird durch mehrere in Verschiebungsrichtung V der Abschrankungseinrichtung 3 voneinander beabstandeten elastischen Elementen 9.1 und mehrere Nockenteile 9.2 gebildet. Die Nockenteile 9.2 werden durch Drehung radial gegen die elastischen Elemente 9.1 gedrückt, um sie gegen das Oberteil 1 zu verspannen. Die Nockenteile 9.2 werden durch die Querschnittsform der Welle 6 gebildet, die in der gezeigten Ausführungsform als Vierkantprofil ausgeführt ist.

Figur 8 zeigt einen Querschnitt entlang Linie B-B aus Figur 6. Die Nockenteile 9.2 drücken gegen die elastischen Elemente 9.1, was dazu führt, dass die elastischen Elemente 9.1 gegen das Oberteil 1 gedrückt werden. Dadurch kann die Abschrankungseinrichtung 3 fixiert werden. Aus Figur 8 wird ersichtlich, dass wenn die Welle 6 um 45° gedreht wird, die Beaufschlagung der Nockenteile 9.2 auf die elastischen Elemente 9.1 gelöst wird, was dazu führt, dass die Abschrankungseinrichtung 3 verschoben werden kann.

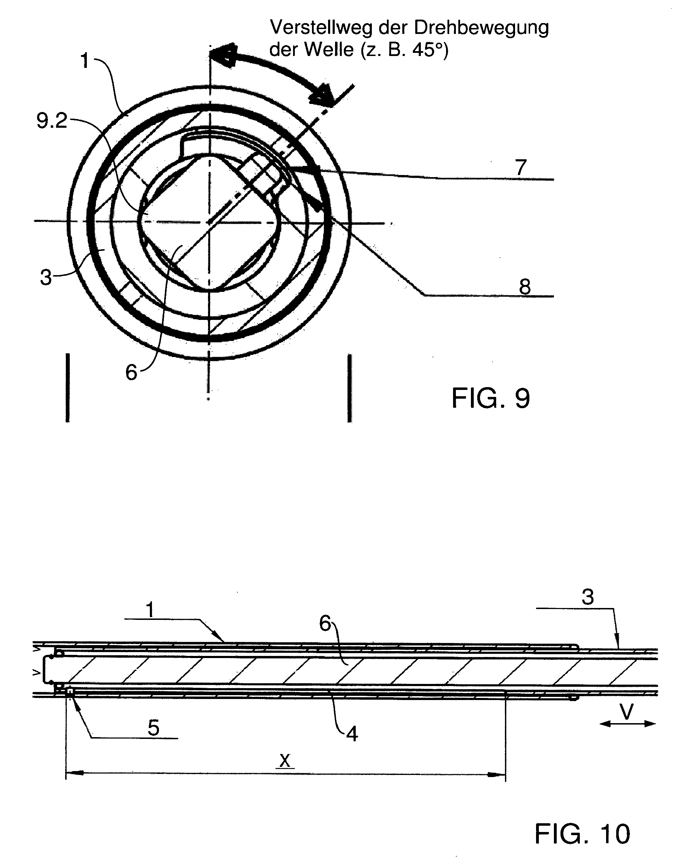

Figur 9 zeigt einen Querschnitt entlang Linie C-C aus Figur 6. Figur 9 zeigt, dass der Verstellweg der Drehbewegung der Welle 6 durch eine Nocken-Kulisse-Konstruktion 7, 8 (Nokken 7, Kulisse 8) begrenzt wird. Der Nocken 7 ist drehfest an der Welle 6 ausgebildet, während die Kulisse 8 nicht-drehbar ausgebildet ist, um als Widerlager oder Anlage für den Nokken 7 zu dienen.

Figur 10 zeigt einen Längsschnitt entlang Linie D-D aus Figur 6. Figur 10 zeigt ein Langloch 4 mit einem Verstellweg X, entlang dem die Abschrankungseinrichtung 3 verschiebbar ist. In das Langloch 4 ragt ein Anschlag 5 (z. B. eine Madenschraube), um den translatorischen Verstellweg der Abschrankungseinrichtung 3 in der eingefahrenen Stellung und der maximal ausgefahrenen Stellung zu begrenzen.

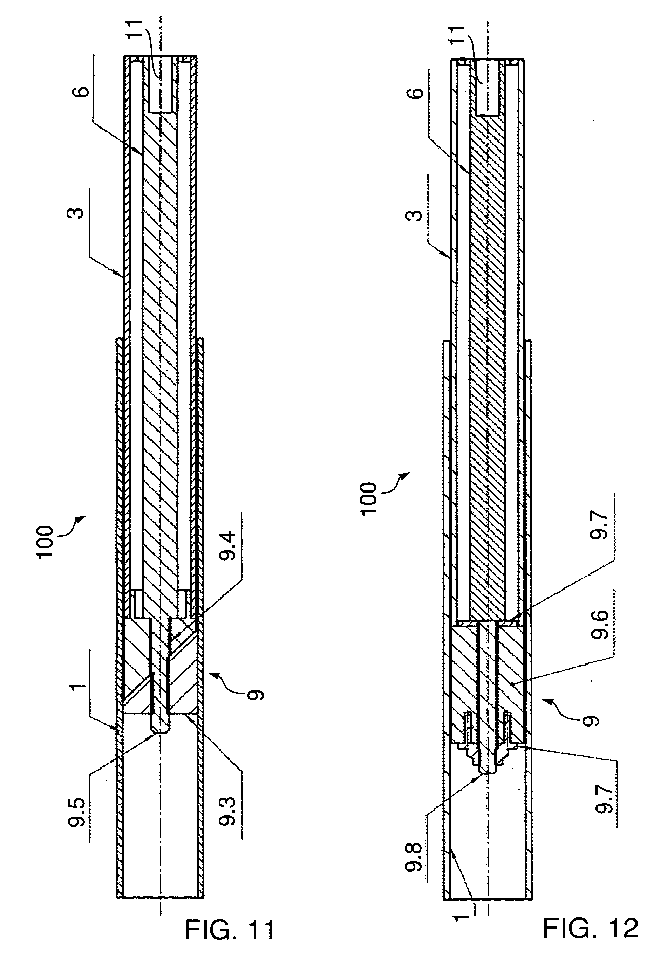

Figur 11 zeigt einen Längsschnitt eines Teils einer Abschrankungskonstruktion 100 gemäß einer anderen Ausführungsform der Erfindung. Figur 11 zeigt insbesondere eine alternative Möglichkeit zur Ausbildung der Fixierung 9. Bei der in Figur 11 gezeigten Ausführungsform wird die Fixierung 9 über zwei Keile 9.3 und 9.4 gebildet. Einer der Keile 9.3, 9.4 ist mittels eines mit der Welle 6 drehfest verbundenen Gewindestifts 9.5 gegen den anderen der Keile 9.3, 9.4 verschiebbar, um eine Verspannung mit dem Oberteil 1 zu erzeugen.

Figur 12 zeigt einen Längsschnitt einer Abschrankungskonstruktion 100 gemäß einer wiederum anderen Ausführungsform der Erfindung. Figur 12 zeigt insbesondere eine andere Möglichkeit zur Ausbildung der Fixierung 9. Bei der in Figur 12 gezeigten Ausführungsform wird die Fixierung 9 über ein elastisches Element 9.6 und zwei Widerlagerteile 9.7 gebildet. Das elastische Element 9.6 ist zwischen den zwei Widerlagerteilen 9.7 angeordnet. Ein Widerlagerteil 9.7 ist mittels eines drehfest mit der Welle 6 verbundenen Gewindestifts 9.8 axial gegen das elastische Element 9.6 drückbar, um es radial gegen das Oberteil 1 zu verspannen. Das elastische Element 9.6 wird zudem durch zumindest eines der Widerlagerteile 9.7 so fixiert, dass es an einem Mitdrehen gehindert wird. Dazu umfasst das Widerlagerteil 9.7 Zapfen, die formschlüssig in das elastische Element 9.6 eingreifen.

In den zuvor beschriebenen Ausführungsformen sind die Welle 6 und die Fixierung 9 und die damit einhergehenden Merkmale an dem Oberteil 1 ausgebildet. Alternativ oder ergänzend können die Welle 6 und die Fixierung 9 und die damit einhergehenden Merkmale ebenso an dem Unterteil 2 ausgebildet werden.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche, unabhängig von den in Bezug genommenen Merkmalen und Ansprüchen.

### Bezugszeichenliste

- 1: Oberteil
- 2: Unterteil
- 3: Abschrankungseinrichtung
- 4: Langloch
- 5: Anschlag
- 6: drehbare Welle
- 7: Nocken
- 8: Kulisse
- 9: Fixierung
- 9.1: zumindest ein elastisches Element
- 9.2: zumindest ein Nockenteil
- 9.3: Keil
- 9.4: Keil
- 9.5: Gewindestift
- 9.6: elastisches Element
- 9.7: Widerlagerteil(e)
- 9.8: Gewindestift
- 10: Zugang
- 11: Kopplungseinrichtung
- 12: Vierkantschlüssel
- 100: Abschrankungskonstruktion
- R: Rollstuhl
- V: Verschieberichtung der Abschrankungseinrichtung
- X: Verstellweg
- H: Höhenrichtung
- Q: Querrichtung
- L: Längsrichtung

## Patentansprüche

1. Abschrankungskonstruktion (100) für einen Rollstuhlplatz in einem Fahrzeug, vorzugsweise in einem Omnibus, mit einem Oberteil (1) und einem Unterteil (2) zur Montage an das Fahrzeug und einer mit dem Oberteil (1) und dem Unterteil (2) verbundenen Abschrankungseinrichtung (3), **dadurch gekennzeichnet, dass** die Abschrankungseinrichtung (3) relativ zu dem Oberteil (1) und dem Unterteil (2) translatorisch in eine eingefahrene Stellung und eine oder mehrere ausgefahrene Stellungen verschiebbar ist, wobei die Abschrankungseinrichtung (3) sich abschnittsweise koaxial zu dem Oberteil (1) und/oder dem Unterteil (2) erstreckt und zusätzlich dazu abschnittsweise in zwei weiteren Raumrichtungen (H, L).

2. Abschrankungskonstruktion (100) nach Anspruch 1, **dadurch gekennzeichnet, dass** die Abschrankungseinrichtung (3) stufenlos verschiebbar ist.

3. Abschrankungskonstruktion (100) nach Anspruch 1 oder 2, **dadurch gekennzeichnet, dass** die Abschrankungseinrichtung (3) entlang eines Langlochs (4) verschiebbar ist und in das Langloch (4) ein Anschlag (5) hineinragt, um den translatorischen Verstellweg der Abschrankungseinrichtung (3) in der eingefahrenen Stellung und der maximal ausgefahrenen Stellung zu begrenzen.

4. Abschrankungskonstruktion (100) nach einem der vorhergehenden Ansprüche, **dadurch gekennzeichnet, dass** die Abschrankungskonstruktion (100) eine drehbare Welle (6) aufweist, die drehbar ist, um eine Fixierung (9) zum Fixieren der Abschrankungseinrichtung (3) relativ zu dem Oberteil (1) oder dem Unterteil (2) zu betätigen.

5. Abschrankungskonstruktion (100) nach Anspruch 4, **dadurch gekennzeichnet, dass**
- die Welle (6) zumindest abschnittsweise koaxial innerhalb des Oberteils (1) oder des Unterteils (2) verläuft, und/oder
- die Welle (6) zumindest abschnittsweise koaxial innerhalb der Abschrankungseinrichtung (3) verläuft.

6. Abschrankungskonstruktion (100) nach Anspruch 4 oder 5, **dadurch gekennzeichnet, dass** die Fixierung (9) eine Verspannfixierung ist, insbesondere eine-Reibungs- oder Klemmfixierung.

7. Abschrankungskonstruktion (100) nach einem der Ansprüche 4 bis 6, **dadurch gekennzeichnet, dass** die Fixierung (9) innerhalb des Oberteils (1) oder des Unterteils (2) ausgebildet ist, zweckmäßig ohne von außen sichtbar zu sein.

8. Abschrankungskonstruktion (100) nach einem der Ansprüche 4 bis 7, **dadurch gekennzeichnet, dass** der Verstellweg der Drehbewegung der Welle (6) durch eine Nocken-Kulissen-Konstruktion (7, 8) begrenzt wird.

9. Abschrankungskonstruktion (100) nach Anspruch 8, **dadurch gekennzeichnet, dass** der Nocken (7) an der Welle (6) ausgebildet ist und die Kulisse (8) relativ zu dem Oberteil (1) oder dem Unterteil (2) nicht-drehbar ausgebildet ist.

10. Abschrankungskonstruktion (100) nach einem der Ansprüche 4 bis 9, **dadurch gekennzeichnet, dass** die Fixierung (9) durch zumindest ein elastisches Element (9.1) und zumindest ein Nockenteil (9.2) gebildet wird, wobei das Nockenteil (9.2) durch seine Drehung radial gegen das elastische Element (9.1) drückbar ist, um es gegen das Oberteil (1) oder das Unterteil (2) zu verspannen.

11. Abschrankungskonstruktion (100) nach Anspruch 10, **dadurch gekennzeichnet, dass** das Nockenteil (9.2) an der Welle (6) ausgebildet ist und/oder durch die Querschnittsform der Welle (6) gebildet wird.

12. Abschankungskonstruktion (100) nach Anspruch 10 oder 11, **dadurch gekennzeichnet, dass** das elastische Element (9.1) in einer Öffnung oder Aussparung der Abschrankungseinrichtung (3) fixiert angeordnet ist.

13. Abschrankungskonstruktion (100) nach einem der Ansprüche 10 bis 12, **dadurch gekennzeichnet, dass** mehrere elastische Elemente (9.1) längs der Abschrankungseinrichtung (3) beabstandet voneinander angeordnet sind.

14. Abschrankungskonstruktion (100) nach einem der Ansprüche 10 bis 13, **dadurch gekennzeichnet, dass** mehrere Nockenteile (9.2) in Umfangsrichtung der Welle (6) beabstandet voneinander angeordnet sind.

15. Abschrankungskonstruktion (100) nach einem der Ansprüche 4 bis 9, dadurch **gekennzeichet, dass** die Fixierung (9) über zumindest zwei Keile (9.3, 9.4) gebildet wird, wobei ein Keil, vorzugsweise mittels eines mit der Welle (6) drehfest verbundenen Gewindestifts (9.5), gegen den anderen Keil verschiebbar ist, um eine Verspannung mit dem Oberteil (1) oder dem Unterteil (2) zu erzeugen.

16. Abschrankungskonstruktion (100) nach einem der Ansprüche 4 bis 9, **dadurch gekennzeichnet, dass** die Fixierung (9) über ein elastisches Element (9.6) und zwei Widerlagerteile (9.7) gebildet wird, wobei das elastische Element (9.6) zwischen den zwei Widerlagerteilen (9.7) angeordnet ist und ein Widerlagerteil (9.7), vorzugsweise mittels eines drehfest mit der Welle (6) verbundenen Gewindestifts (9,8), axial gegen das elastische Element (9.6) drückbar ist, um es radial gegen das Oberteil (1) oder das Unterteil (2) zu verspannen.

17. Abschrankungskonstruktion (100) nach Anspruch 16, **dadurch gekennzeichnet, dass** das elastische Element (9.6) durch ein Widerlagerteil (9.7) fixiert ist, um es an einem Mitdrehen zu hindern.

18. Abschrankungskonstruktion (100) nach einem der vorhergehenden Ansprüche, **dadurch gekennzeichnet, dass** die Abschrankungseinrichtung (3) abschnittsweise in dem Oberteil (1) und/oder dem Unterteil (2) verläuft, vorzugsweise koaxial.

19. Abschrankungskonstruktion (100) nach einem der vorhergehenden Ansprüche, **dadurch gekennzeichnet, dass** das Oberteil (1), das Unterteil (2) und die Abschrankungseinrichtung (3) als Rohrkonstruktion ausgeführt rind.

20. Abschrankungskonstruktion (100) nach einem der Ansprüche 4 bis 19, **dadurch gekennzeichnet, dass** die Welle (6) über einen Zugang (10) und eine Kopplungseinrichtung (11) axial betätigbar ist und/oder der Zugang (10) zur Betätigung der Welle (6) in einem Krümmungsabschnitt der Abschrankungseinrichtung (3) ausgebildet ist.

21. Abschrankungskonstruktion (100) nach einem der Ansprüche 4 bis 20, **dadurch gekennzeichnet, dass** die Welle (6) eine Kopplungseinrichtung (11) aufweist, die an einem axialen Endabschnitt der Welle (6) angeordnet ist und zur Betätigung mittels eines Schlüssels (12) ausgeführt ist.

22. Fahrzeug, vorzugsweise Omnibus, mit einem Rollstuhlplatz und einer Abschrankungskonstruktion (100) nach einem der vorhergehenden Ansprüche.

## Claims

1. A barrier construction (100) for a wheelchair space in a vehicle, preferably in a bus, with an upper part (1) and a lower part (2) for mounting onto the vehicle and with a barrier device (3) which is connected to the upper part (1) and to the lower part (2), **characterized in that** the barrier device (3) is displaceable in a translatory manner relative to the upper part (1) and to the lower part (2) into a retracted position and into one or more extended positions, wherein the barrier device (3) extends partially coaxially to the upper part (1) and/or to the lower part (2) and, in addition thereto, extends partially in two further directions in space (H, L).

2. The barrier construction (100) according to Claim 1, **characterized in that** the barrier device (3) is displaceable in an infinitely variable manner.

3. The barrier construction (100) according to Claim 1 or 2, **characterized in that** the barrier device (3) is displaceable along an elongated hole (4) and a stop (5) projects into the elongated hole (4) in order to limit the translatory adjustment distance of the barrier device (3) in the retracted position and the maximally extended position.

4. The barrier construction (100) according to one of the preceding claims, **characterized in that** the barrier construction (100) has a rotatable shaft (6) which is rotatable in order to actuate a fixing means (9) for fixing the barrier device (3) relative to the upper part (1) or to the lower part (2).

5. The barrier construction (100) according to Claim 4, **characterized in that**
- the shaft (6) runs at least partially coaxially within the upper part (1) or the lower part (2), and/or
- the shaft (6) runs at least partially coaxially within the barrier device (3).

6. The barrier construction (100) according to Claim 4 or 5, **characterized in that** the fixing means (9) is a bracing fixing means, in particular a frictional or clamping fixing means.

7. The barrier construction (100) according to one of Claims 4 to 6, **characterized in that** the fixing means (9) is formed within the upper part (1) or the lower part (2), expediently without being visible from the outside.

8. The barrier construction (100) according to one of Claims 4 to 7, **characterized in that** the adjustment distance of the rotational movement of the shaft (6) is limited by a cam and slotted-link construction (7, 8).

9. The barrier construction (100) according to Claim 8, **characterized in that** the cam (7) is formed on the shaft (6) and the slotted link (8) is designed to be non-rotatable relative to the upper part (1) or to the lower part (2).

10. The barrier construction (100) according to one of Claims 4 to 9, **characterized in that** the fixing means (9) is formed by at least one elastic element (9.1) and at least one cam part (9.2), wherein rotation of the cam part (9.2) causes said cam part to be pressable radially against the elastic element (9.1) in order to brace the latter against the upper part (1) or the lower part (2).

11. The barrier construction (100) according to Claim 10, **characterized in that** the cam part (9.2) is formed on the shaft (6) and/or is formed by the cross-sectional shape of the shaft (6).

12. The barrier construction (100) according to Claim 10 or 11, **characterized in that** the elastic element (9.1) is arranged fixed in an opening or recess of the barrier device (3).

13. The barrier construction (100) according to one of Claims 10 to 12, **characterized in that** a plurality of elastic elements (9.1) are arranged spaced apart from one another along the barrier device (3).

14. The barrier construction (100) according to one of Claims 10 to 13, **characterized in that** a plurality of cam parts (9.2) are arranged spaced apart from one another in the circumferential direction of the shaft (6).

15. The barrier construction (100) according to one of Claims 4 to 9, **characterized in that** the fixing means (9) is formed via at least two wedges (9.3, 9.4), wherein one wedge is displaceable towards the other wedge, preferably by means of a threaded stud (9.5) connected to the shaft (6) for rotation therewith, in order to produce bracing with the upper part (1) or the lower part (2).

16. The barrier construction (100) according to one of Claims 4 to 9, **characterized in that** the fixing means (9) is formed via an elastic element (9.6) and two abutment parts (9.7), wherein the elastic element (9.6) is arranged between the two abutment parts (9.7), and one abutment part (9.7) is pressable axially against the elastic element (9.6), preferably by means of a threaded stud (9.8) connected to the shaft (6) for rotation therewith, in order to brace said elastic element radially against the upper part (1) or the lower part (2).

17. The barrier construction (100) according to Claim 16, **characterized in that** the elastic element (9.6) is fixed by an abutment part (9.7) in order to prevent said elastic element from also rotating.

18. The barrier construction (100) according to one of the preceding claims, **characterized in that** the barrier device (3) runs partially, preferably coaxially, in the upper part (1) and/or in the lower part (2).

19. The barrier construction (100) according to one of the preceding claims, **characterized in that** the upper part (1), the lower part (2) and the barrier device (3) are designed as a tubular construction.

20. The barrier construction (100) according to one of Claims 4 to 19, **characterized in that** the shaft (6) is axially actuable via an inlet (10) and a coupling device (11), and/or the inlet (10) for actuating the shaft (6) is formed in a curved section of the barrier device (3).

21. The barrier construction (100) according to one of Claims 4 to 20, **characterized in that** the shaft (6) has a coupling device (11) which is arranged on an axial end section of the shaft (6) and is designed for actuation by means of a key (12).

22. A vehicle, preferably bus, with a wheelchair space and a barrier construction (100) according to one of the preceding claims.

## Revendications

1. Système de barrière (100) destiné à un espace pour fauteuil roulant dans un véhicule, de préférence dans un omnibus, avec une partie supérieure (1) et une partie inférieure (2) à monter au véhicule et avec un dispositif de barrière (3) relié à la partie supérieure (1) et à la partie inférieure (2), **caractérisé en ce que** le dispositif de barrière (3) peut être coulissé par rapport à la partie supérieure (1) et à la partie inférieure (2) translationnellement dans une position rentrée et une ou plusieurs positions sorties, le dispositif de barrière (3) s'étendant en partie dans le plan coaxial par rapport à la partie supérieure (1) et/ou à la partie inférieure (2) et s'étendant en outre de ce fait en partie dans deux directions supplémentaires dans l'espace (H, L).

2. Système de barrière (100) selon la revendication 1, **caractérisé en ce que** le dispositif de barrière (3) peut être coulissé en continu.

3. Système de barrière (100) selon la revendication 1 ou 2, **caractérisé en ce que** le dispositif de barrière (3) peut être coulissé le long d'un trou oblong (4) et qu'une butée (5) s'enfonce dans le trou oblong (4), pour limiter la course de déplacement translationnelle du dispositif de barrière (3) dans la position rentrée et la position sortie maximale.

4. Système de barrière (100) selon l'une quelconque des revendications précédentes, **caractérisé en ce que** le système de barrière (100) comporte un arbre (6) pouvant pivoter, pour actionner une fixation (9) en vue de fixer le dispositif de barrière (3) par rapport à la partie supérieure (1) ou à la partie inférieure (2).

5. Système de barrière (100) selon la revendication 4, **caractérisé en ce que** :
- l'arbre (6) s'étend au moins en partie dans le plan coaxial à l'intérieur de la partie supérieure (1) ou de la partie inférieure (2) ; et/ou
- l'arbre (6) s'étend au moins en partie dans le plan coaxial à l'intérieur du dispositif de barrière (3).

6. Système de barrière (100) selon la revendication 4 ou 5, **caractérisé en ce que** la fixation (9) est une fixation de serrage, notamment une fixation de frottement ou de serrage.

7. Système de barrière (100) selon l'une quelconque des revendications 4 à 6, **caractérisé en ce que** la fixation (9) est réalisée à l'intérieur de la partie supérieure (1) ou de la partie inférieure (2), opportunément sans être visible de l'extérieur.

8. Système de barrière (100) selon l'une quelconque des revendications 4 à 7, **caractérisé en ce que** la course de déplacement du mouvement de rotation de l'arbre (6) est délimitée par une construction cames-coulisses (7, 8).

9. Système de barrière (100) selon la revendication 8, **caractérisé en ce que** la came (7) est réalisée au niveau de l'arbre (6) et que la coulisse (8) est réalisée de façon à ne pas pouvoir tourner par rapport à la partie supérieure (1) ou à la partie inférieure (2).

10. Système de barrière (100) selon l'une quelconque des revendications 4 à 9, **caractérisé en ce que** la fixation (9) est formée par au moins un élément élastique (9.1) et au moins une partie de came (9.2), la partie de came (9.2) pouvant être mise sous pression par sa rotation dans le plan radial contre l'élément élastique (9.1), pour le tendre contre la partie supérieure (1) ou la partie inférieure (2).

11. Système de barrière (100) selon la revendication 10, **caractérisé en ce que** la partie de came (9.2) est réalisée au niveau de l'arbre (6) et/ou est formée par la forme en section transversale de l'arbre (6).

12. Système de barrière (100) selon la revendication 10 ou 11, **caractérisé en ce que** l'élément élastique (9.1) est disposé de façon à être fixé dans une ouverture ou un évidement du dispositif de barrière (3).

13. Système de barrière (100) selon l'une quelconque des revendications 10 à 12, **caractérisé en ce que** plusieurs éléments élastiques (9.1) sont disposés à une certaine distance les uns des autres dans le sens de la longueur du dispositif de barrière (3).

14. Système de barrière (100) selon l'une quelconque des revendications 10 à 13, **caractérisé en ce que** plusieurs parties de came (9.2) sont disposées à une certaine distance les unes des autres dans la direction circonférentielle de l'arbre (8).

15. Système de barrière (100) selon l'une quelconque des revendications 4 à 9, **caractérisé en ce que** la fixation (9) est formée via au moins deux clavettes (9.3, 9.4), une clavette pouvant être coulissée contre, l'autre clavette, de préférence à l'aide d'une tige filetée (9.5) reliée fixement en rotation à l'arbre (6), pour réaliser un serrage avec la partie supérieure (1) ou la partie inférieure (2).

16. Système de barrière (100) selon l'une quelconque des revendications 4 à 9, **caractérisé en ce que** la fixation (9) est formée via un élément élastique (9.6) et deux parties de contre-palier (9.7), l'élément élastique (9.6) étant disposé entre les deux parties de contre-palier (9.7) et une partie de contre-palier (9.7) pouvant être comprimée contre l'élément élastique (9.6), de préférence à l'aide d'une tige filetée (9.8) reliée solidairement en rotation à l'arbre (6), dans le plan axial, pour le serrer dans le plan radial contre la partie supérieure (1) ou la partie inférieure (2).

17. Système de barrière (100) selon la revendication 16, **caractérisé en ce que** l'élément élastique (9.6) est fixé par une partie de contre-palier (9.7), pour entraver une rotation conjointe.

18. Système de barrière (100) selon l'une quelconque des revendications précédentes, **caractérisé en ce que** le dispositif de barrière (3) s'étend en partie dans la partie supérieure (1) et/ou la partie inférieure (2), de préférence de façon coaxiale.

19. Système de barrière (100) selon l'une quelconque des revendications précédentes, **caractérisé en ce que** la partie supérieure (1), la partie inférieure (2) et le dispositif de barrière (3) étant réalisés sous la forme d'une construction tubulaire.

20. Système de barrière (100) selon l'une quelconque des revendications 4 à 19, **caractérisé en ce que** l'arbre (6) est actionnable dans le plan axial via un accès (10) et un dispositif de couplage (11) et/ou que l'accès (10) est réalisé pour actionner l'arbre (6) dans une section, incurvée du dispositif de barrière (3).

21. Système de barrière (100) selon l'une quelconque des revendications 4 à 20, **caractérisé en ce que** l'arbre (6) comporte un dispositif de couplage (11) disposé au niveau d'une section d'extrémité axiale de l'arbre (6) et réalisé pour l'actionnement à l'aide d'une clé (12).

22. Véhicule, de préférence omnibus, avec un espace pour fauteuil roulant et un système de barrière (100) selon l'une quelconque des revendications précédentes.
